# EUROPEAN PATENT SPECIFICATION

(11) **EP 0 504 976 B1**
(45) Date of publication and mention of the grant of the patent: **14.06.1995**
(21) Application number: 92200684.6
(22) Date of filing: 10.03.1992
(51) Int. Cl.: F16L 3/22, F16L 3/20

(54) **Wall-mounting plate**
Wandhalteplatte
Plaque de montage mural

(30) Priority: 19.03.1991 NL 9100488
(43) Date of publication of application: 23.09.1992
(73) Proprietor: J. van Walraven B.V., NL-3641 RK Mijdrecht (NL)
(72) Inventor: Van Walraven, Jan, NL-3641 GP Mijdrecht (NL)
(74) Representative: Boelsma, Gerben Harm, Ir.

(56) References cited:
- EP-A- 0 408 500
- NL-C- 40 328
- US-A- 2 375 513
- US-A- 4 488 844

## Description

The invention relates to an elongated mounting plate assembly for attachment to a wall, provided with at least two longitudinally aligned slots and an opening therebetween for inserting a fastening screw.

Such mounting plate assemblies are known and used e.g. for the attachment of parallel pipes to a wall by means of pipe clips suspended on threaded rods that extend from the mounting plate.

In a well-known embodiment of such a mounting plate assembly an integrally formed mounting plate of a U-shaped cross-section is fastened to the wall with the longitudinal edges of its flanges bearing on the wall, so that a space is left between the web of the U and the wall surface, a space is left for accommodating fastening nuts for the threads rods. The longitudinal slots allow the spacing between the threaded rods and thereby the spacing between the pipe clips and pipes respectively to be varied.

In most cases it is desired to first attach the mounting plate and then connect the threaded rods thereto. In practise this is often connected with difficulties. For, upon the mounting plate having been attached to the wall, the nuts for the threaded rods have to be inserted - as loose parts - into said space through the open ends of the same. Apart from the fact that small loose parts are not easy to handle, it often occurs that one of the open ends is blocked, e.g. by an adjoining wall in a corner. In such a case at least one of the nuts has to be placed into the nut receiveing space of the mounting plate prior to placing the plate together with the nut against the wall and attaching it. It will be clear that this requires the plate and the nut placed loosely therein to be handled quite cautiously.

Similar difficulties are encountered when the mounting plate is to be placed against a wall with its length directed vertically. In that case the lowermost nut will have to be supported by hand or by an additional means when the respective threaded rod is to be placed.

In US-A-2 375 513 a mounting plate assembly is disclosed, comprising a base member which is designed to be suspended from a sealing or wall rather than to be fastened in contact with a wall. This base member has a generally U-shaped cross-section, with its U-flanges bent inwardly to devine a longitudinal slot at the side turned away from the suspended side. Special pipe clips are provided and designed to project through the longitudinal slots and to engage the inwardly bent U-flanges. As an alternative fig. 18 and fig. 20 of this document show the fastening of a pipe clip by means of a suspension rod that has its free upper end extending upweardly through said longitudinal slot and threadingly engage a nut in the hollow space of the base member. This document does not teach how to handle, when the base member would be fastened directly to an upstanding wall to support a threaded rod extending horizontally from it.

The invention aims at removing the above disadvantages and inconveniences of the well-known mounting plate assemblies.

Accordingly the invention provided for an elongated mounting plate assembly, comprising an elongated base member having a bottom, opposite longitudinal side walls and opposite end walls, said bottom and walls defining a longitudinal cavity slidingly receiving and holding a series of at least two nuts, the cavity being closed, at the side turned away from the bottom, by a cover plate, that is provided with at least two longitudinally aligned slots through which threaded rods extend to threadingly engage the nuts, an opening for inserting a fastening screw being provided in said cover plate between said two slots, said opening being located opposite to a fastening opening in the bottom of the base member.

With such a composite mounting plate the nuts may be inserted in advance (i.e. when assembling the mounting plate in the factory) into the cavity of the base member which is then closed by the cover plate. In a way the nuts are prepacked within the mounting plate. Moreover the use of loose nuts is avoided.

In a preferred embodiment partitions are provided which divide the cavity into mutually separated compartments located on either side of the fastening opening. This guarantees the nuts to get and remain positioned at the correct sides of the fastening screw.

The invention will be hereinafter further explained by way of example with reference to the drawing in which:
Fig. 1 shows a perspective view of a well-known mounting plate with two threaded rods extending therefrom, to which e.g. a pipe clip may be connected;
fig. 2 shows a perspective view of a base member according to the invention;
fig. 3 shows a perspective view of the combination of the mounting plate of fig. 1 and the base member of fig. 2 and
fig. 4 shows a perspective view of a simple modification of the composite mounting plate of fig. 3.

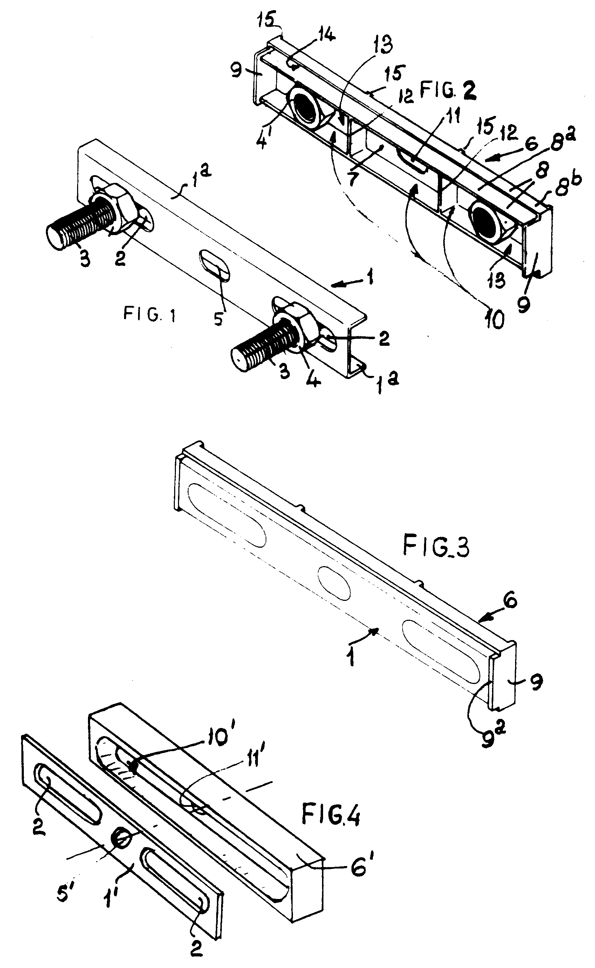

Fig. 1 illustrates a well-known, cross-sectionally U-shaped mounting plate 1 with two slots 2 which allow the spacing between the threaded rods 3, which are connected to the mounting plate by a nut (not visible) and a lock nut 4, to be varied. The mounting plate can be fastened to a wall by means of a screw to be inserted through a central opening 5.

Fig. 2 shows a base member 6 having a bottom 7 and longitudinal walls 8 and end walls 9 extending therefrom, which define a cavity 10 the width of which corresponds with the width of a nut 4' matching with the threaded rods 3 of fig. 1. A central opening 11 is provided in the both 7 through which a fastening screw may be inserted. The cavity 10, extending between the two end walls 9, is divided, by partitions 12 located on either side of the opening 11, into two side compartments 13 and a nut 4' is placed into and may longitudinally slide in each of these compartments.

Furthermore the base member 6 is designed such that it can be assembled with the well-known mounting plate 3 of fig. 1 into the composite mounting plate of the invention which is shown in fig. 3. For that purpose the longitudinal walls 8 have longitudinal slits 14 for receiving the flanges 1a of the mounting plate 1, while capturing the mounting plate 10 with its end between the slightly forwardly projecting end walls 9 (at 9a in fig. 3) of the base member 6. The slits 14 divide the longitudinal wall 8 into an inner longitudinal wall section 8a having a height which corresponds with that of the nuts 4', and an outer longitudinal wall section 8b having a reduced height.

In the composite mounting plate of fig. 3 the original mounting plate is now functioning as a cover plate, behind which nuts 4' are captured in a premounted and slidable position for later use when fastening the threaded rods 3.

It will be understood that the composite mounting plate of fig. 3 allows an easy handling when fastening it to a wall and that it is then quite simple to screw the threaded rods 3 into the nuts 4' (not shown in fig. 3) which are visible through the slots 2 and thereby slide the nuts into the desired mutually spaced positions.

The base member 6 is provided with transverse ribs on its back side which allow a base member of a plastics material to adapt itself to a not completely flat wall surface and thereby contribute to a stable position of the mounting plate on the wall.

Fig. 4 shows the composite mounting plate of fig. 3 in its simplest form an elongated piece 6' of plastics material is recessed to form a cavity 10' in a manner similar to the forming of a key way in a shaft, said cavity having a width corresponding to that of the nut 4' and having a depth corresponding with the height of the nut 4'. The thus recessed piece of plastics material may function as a base member and is covered by a flat cover plate 1' which comprises the slots 2. Aligned opening 11' and 5' respectively are provided in the bottom of the base member 6' and in the cover plate 1' for receiving a screw by means of which the assembly may be fastened to a wall.

## Claims

1. An elongated mounting plate assembly, comprising an elongated base member (6; 6') having a bottom (7), opposite longitudinal side walls (8) and opposite end walls (9), said bottom and walls defining a longitudinal cavity (10; 10') slidingly receiving and holding a series of at least two nuts, the cavity being closed, at the side turned away from the bottom, by a cover plate (1; 1'), that is provided with at least two longitudinally aligned slots (2) through which threaded rods extend to threadingly engage the nuts, an opening (5; 5') for inseting a fastening screw being provided in said cover plate (1; 1') between said two slots (2), said opening (5; 5') being located opposite to a fastening opening (11) in the bottom (7) of the base member (6; 6').

2. A mounting plate assembly according to claim 1, characterized by partitions (12) that divide the cavity (10) of the base member (6) into mutually separated compartments located on either side of the opening (11) in the bottom (7) of said base member (6).

3. A mounting plate assembly according to claims 1-2, characterized in that the cover plate (1) is U-shaped in cross section and has its U-flanges (1a) engaging the outer sides of the longitudinal walls of the base member (6).

4. A mounting plate according to plates 1-3, characterized in that the base member (6; 6') is formed of plastics material.

## Patentansprüche

1. Längliche Halteplattenanordnung, umfassend einen Auflagekörper (6; 6') mit einem Bodem (7), einandergegenüberliegenden Seitenwänden (8) und einander gegenüberstehenden Stirnwänden (9), welcher Boden und welche Wände einen länglichen Raum begrenzen, in dem eine Reihe von mindestens zwei Muttern verschieblich gehalten sind, welcher Raum an der vom Boden abgewendeten Seite mit einer Deckelplatte (1, 1') abgeschlossen ist, welche mit mindestens zwei in der Längsrichtung ausgerichteten Schlitzen (2) versehen ist, durch welche Schlitze mit Gewinde versehene Stangen hindurchragen und in den Muttern eingeschraubt sind, wobei in der Deckelplatte (1; 1'), zwischen den beiden Schlitzen (2) ein Loch (5, 5') zum Einstecken einer Befestigungsschraube vorgesehen ist, welches Loch (5, 5') einm im Bodem (7) des Auflagekörpers (6; 6') vorgesehenen Befestigungsloch (11) gegenüberliegt.

2. Halteplattenanordnung nach Anspruch 1, gekennzeichnet durch Trennwände, welche den Raum (10) des Anflagekörpers (6) in voneinander getrennten, an beiden Seiten des Lochs (11) im Beden (7) des Auflagekörpers (6) befindlichen Abteilungen aufteilen.

3. Halteplattenanordnung nach Ansprüchen 1-2, dadurch gekennzeichnet, dass die Deckelplatte (1) einen U-förmigen Querschnitt aufweist und mit den U-Flanschen auf der Aussenseite der Längswände des Anflagekörpers (6) anliegt.

4. Halteplattenanordnung nach Ansprüchen 1-3, dadurch gekennzeichnet, dass der Auflagekörper (6; 6') aus Kunststoff geformt ist.

## Revendications

1. Ensemble formant plaque de montage allongée, comportant un élément formant base allongée (6; 6') ayant un fond (7), des parois latérales longitudinales opposées (8) et des parois formant extrémités opposées (9), ledit fond et les parois définissant une cavité longitudinale (10; 10') recevant et retenant de manière coulissante une série d'au moins deux écrous, la cavité étant fermée, au niveau du côté éloigné du fond, par une plaque (1; 1') formant couvercle, qui est munie d'au moins deux fentes (2) alignées de manière longitudinale à travers lesquelles des tiges filetées s'étendent pour venir en prise filetée avec les écrous, une ouverture (5; 5') pour insérer une vis de fixation étant agencée dans ladite plaque (1; 1') formant couvercle entre lesdites deux fentes (2), ladite ouverture (5; 5,) étant située en vis à vis d'une ouverture de fixation (11) située dans le fond (7) de l'élément formant base (6; 6').

2. Ensemble formant plaque de montage selon la revendication 1, caractérisé en ce que des cloisons (12) divisent la cavité (10) de l'élément formant base (6) sous forme de compartiments mutuellement séparés situés de chaque côté de l'ouverture (11) située dans le fond (7) dudit élément formant base (6).

3. Ensemble formant plaque de montage selon la revendication 1 ou 2, caractérisé en ce que la plaque formant couvercle (1) a, en section transversale, une forme de U et a les ailes du U (1a) en contact avec les côtés extérieurs des parois longitudinales de l'élément formant base (6).

4. Ensemble formant plaque de montage selon les revendications 1 à 3 caractérisé en ce que l'élément formant base (6; 6') est constitué de matière plastique.
